# NOUVEAU FASCICULE DE BREVET EUROPEEN

(11) **EP 2 673 307 B2**
(45) Date de publication et mention de la décision concernant l'opposition: **22.06.2022**
(45) Mention de la délivrance du brevet: 17.09.2014
(21) Numéro de dépôt: 12707885.5
(22) Date de dépôt: 08.02.2012
(51) Int. Cl.: C08F 10/02, C08F 2/00

(54) **POLYMERISATION RADICALAIRE DE L'ETHYLENE AMORCEE PAR DES PEROXYDES ORGANIQUES A HAUTE PRODUCTIVITE**
DURCH ORGANISCHE PEROXIDE MIT HOHER PRODUKTIVITÄT INITIALISIERTE POLYMERISATION FREIER RADIKALE AUS ÄTHYLEN
FREE RADICAL POLYMERISATION OF ETHYLENE INITIATED BY ORGANIC PEROXIDES WITH HIGH PRODUCTIVITY

(30) Priorité: 10.02.2011 FR 1151086
(43) Date de publication de la demande: 18.12.2013
(73) Titulaire: Arkema France, 92700 Colombes (FR)
(72) Inventeur: NICOL, Pascal, F-69230 Saint Genis Laval (FR); HUB, Serge, F-69100 Villeurbanne (FR)
(74) Mandataire: Arkema Patent
(86) Numéro de dépôt international: PCT/FR2012/050270
(87) Numéro de publication internationale: WO 2012/107689

(56) Documents cités:
- EP-A1- 0 273 090
- EP-A2- 0 259 537
- WO-A1-2008/112373
- FR-A1- 2 946 653
- US-A- 2 650 913
- US-A1- 2008 226 891

## Description

La présente invention se rapporte à un procédé de fabrication de polyéthylène ou d'un copolymère de l'éthylène par polymérisation sous haute pression en présence d'un initiateur de polymérisation peroxydique particulier dans une gamme de température particulière.

Les polyéthylènes basse densité et les copolymères de l'éthylène sont généralement fabriqués dans un réacteur autoclave ou tubulaire sous très haute pression, par introduction en continu d'éthylène, d'un ou plusieurs comonomères éventuels et d'un ou plusieurs initiateurs peroxydes organiques généralement dilués dans un solvant organique. La pression à l'intérieur du réacteur est généralement comprise entre 500.10⁵ et 5000.10⁵ Pa (500 et 5000 bar). La température lors de l'initiation de la réaction est généralement comprise entre 80 et 250°C. La température maximale de réaction est généralement comprise entre 120 et 350°C.

Le taux de conversion en polymère généralement obtenu avec ce type de procédé est de l'ordre de 15 à 25%. De la même façon, la productivité d'un tel procédé, exprimée en grammes de polyéthylène produit par gramme d'initiateur peroxyde utilisé, est généralement comprise entre 1000 et 3000 g/g, et plus généralement inférieure à 2500 g/g.

La recherche de gain de productivité et donc de coût est une préoccupation constante des producteurs de polyéthylène. Il existe un besoin de disposer d'un procédé de fabrication de polyéthylène qui présente une productivité élevée, tout en conservant un taux de conversion en polymère intéressant.

On connaît du document US 2,650,913 un procédé de polymérisation de l'éthylène en présence d'un initiateur 2,2-bis-(tertiary butyl peroxy) butane mais cet initiateur conduit à une productivité faible (cf. exemple 1 de ce document et essai 3 ci-dessous).

On connaît également le document FR 2946653 qui divulgue le 2,2-di-(t-amyl peroxy)propane mais celui-ci n'est absolument pas utilisé en tant qu'initiateur.

On connaît enfin les documents US 2008/0226891, EP 0273090 et EP 0259537 qui divulguent l'utilisation du 2,2-di-(t-amyl peroxy)butane mais ce dernier est utilisé pour la fabrication de polymères très distinct des polymères d'éthylène ou copolymères d'éthylène.

La demanderesse a découvert de façon surprenante que l'utilisation à une température variant de 150 à 200°C d'un initiateur peroxydique de formule 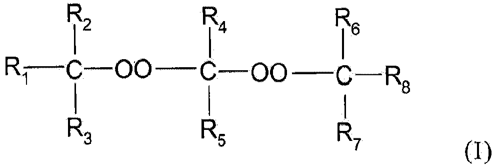 où R1 et R8 représentent indépendamment un groupe alkyle en C2-C6, R2, R3, R6 et R7 représentent indépendamment un groupe alkyle en C1-C5, R4 et R5 représentent indépendamment un groupe alkyle en C1-C6, permettait de résoudre ces problèmes, et d'obtenir une productivité supérieure à 3000 g/g, tout en conservant un taux de conversion en polymère compris entre 13 et 25%.

L'invention a donc pour objet un procédé de fabrication de polyéthylène ou d'un copolymère de l'éthylène comprenant une étape de polymérisation ou copolymérisation radicalaire de l'éthylène à une pression variant de 500.10⁵ à 3000.10⁵ Pa (500 à 3000 bar).

Selon l'invention, la polymérisation ou copolymérisation est initiée à une température d'initiation variant de 150 à 200°C, en présence d'un initiateur de polymérisation peroxydique choisi parmi les composés peroxydes de formule 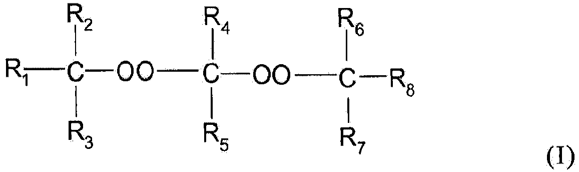 où
R1 et R8 représentent indépendamment un groupe alkyle en C2-C6,
R2, R3, R6 et R7 représentent indépendamment un groupe alkyle en C1-C5,
R4 et R5 représentent indépendamment un groupe alkyle en C1-C6.

Selon un premier mode de réalisation, R2, R3, R4, R6 et R7 représentent chacun un groupe méthyle.

Selon un deuxième mode de réalisation, R1 et R8 représentent indépendamment un groupe alkyle en C2-C4.

Selon un troisième mode de réalisation, R5 représente un groupe alkyle en C2-C4.

Ces trois modes de réalisation peuvent être combinés deux à deux ou à trois.

Ainsi, selon un mode de réalisation particulier, R2, R3, R4, R6 et R7 peuvent représenter chacun un groupe méthyle et R1 et R8 peuvent représenter indépendamment un groupe alkyle en C2-C4.

Selon un autre mode de réalisation particulier, R2, R3, R4, R6 et R7 peuvent représenter chacun un groupe méthyle et R5 peut représenter un groupe alkyle en C2-C4.

Selon un autre mode de réalisation particulier, R1 et R8 peuvent représenter indépendamment un groupe alkyle en C2-C4 et R5 peut représenter un groupe alkyle en C2-C4.

Selon un autre mode de réalisation particulier, R2, R3, R4, R6 et R7 peuvent représenter chacun un groupe méthyle, R1 et R8 peuvent représenter indépendamment un groupe alkyle en C2-C4, et R5 peut représenter un groupe alkyle en C2-C4.

Selon un mode de réalisation particulièrement préféré, l'initiateur de polymérisation peroxydique est le 2,2-di(tertio-amylperoxy)butane.

L'initiateur de polymérisation peroxydique est généralement présent en une quantité massique comprise entre 20 à 1000 ppm par rapport à la quantité massique d'éthylène.

L'initiateur de polymérisation est dilué dans un solvant ou un mélange de solvants. Le ou les solvants peuvent être choisis parmi les alcanes en C1-C20.

Comme expliqué précédemment, la polymérisation ou copolymérisation de l'éthylène se fait à une température d'initiation variant de 150 à 200°C, de préférence de 160 à 190°C.

La polymérisation ou copolymérisation peut être effectuée en présence en outre d'un initiateur peroxydique additionnel.

Cet initiateur peroxydique additionnel peut être choisi parmi le tertiobutylperoxyneodécanoate, le tertiobutylperoxypivalate, le tertioamylperoxypivalate, le di (3,5,5 triméthylhexanoyl) peroxyde, le dodécanoyl peroxyde, le tertioamyl peroxy-2-éthylhexanoate, le tertiobutyl peroxy-2-éthylhexanoate, le tertiobutyl peroxy-3,5,5-triméthylhexanoate, le tertioamyl peroxy-3,5,5-triméthylhexanoate, tertiobutyl peroxybenzoate, le tertiobutylperoxyacetate et le ditertioamyl peroxyde.

La polymérisation ou copolymérisation peut être effectuée en présence d'au moins un additif, de préférence choisi parmi les antioxydants ; les agents de protection UV ; les agents de mise en oeuvre, ayant pour fonction d'améliorer l'aspect final lors de sa mise en oeuvre, telles que les amides grasses, l'acide stéarique et ses sels, l'éthylène bis-stéaramide ou les polymères fluorés ; les agents anti-buée ; les agents anti-bloquants tels que la silice ou le talc ; les charges telles que le carbonate de calcium et les nanocharges comme par exemple les argiles ; les agents de' couplage tels que les silanes ; les agents réticulants comme les peroxydes ; les agents antistatiques ; les agents nucléants ; les pigments ; les colorants ; les plastifiants ; les fluidifiants et les additifs retardateurs de flamme tels que les hydroxydes d'aluminium ou de magnésium.

Ces additifs sont généralement utilisés dans des teneurs comprises entre 10 ppm et 10 000 ppm en poids par rapport au poids de polyéthylène ou de copolymère d'éthylène final. Les plastifiants, les fluidifiants et les additifs retardateurs de flamme peuvent atteindre des quantités bien supérieures à 10 000 ppm.

La polymérisation ou copolymérisation se fait à une pression variant de 500.10⁵ à 3000.10⁵ Pa (500 à 3000 bar), de préférence de 1200.10⁵ à 3000.10⁵ Pa (1200 à 3000 bar), mieux de 1200.10⁵ à 2600.10⁵ Pa (1200 à 2600 bar).

La polymérisation à haute pression est généralement effectuée en réacteur autoclave ou tubulaire. La température de réaction est généralement comprise entre 150°C et 320°C.

Lorsqu'un réacteur tubulaire est utilisé, l'introduction du mélange de l'éthylène et du ou des comonomères éventuels est effectuée de préférence en tête du réacteur tubulaire. L'initiateur ou le mélange d'initiateurs est injecté à l'aide d'une pompe haute pression en tête du réacteur, après l'endroit d'introduction du mélange de l'éthylène et du ou des comonomères éventuels.

Le mélange de l'éthylène et du ou des comonomères éventuels peut être injecté en au moins un autre point du réacteur, cette injection est elle-même suivie d'une nouvelle injection d'initiateur ou d'un mélange d'initiateurs, on parle alors de technique d'injection multipoint. Lorsque la technique d'injection multipoint est utilisée, le mélange est préférentiellement injecté de manière telle que le rapport pondéral du mélange injecté en entrée de réacteur sur la totalité du mélange injecté est compris entre 10 et 90%.

D'autres procédés de polymérisation ou copolymérisation haute pression tubulaire utilisables sont par exemple ceux décrits dans US2006/0149004 A1 ou dans US2007/0032614 A1.

On peut également utiliser un réacteur autoclave pour réaliser la polymérisation haute pression radicalaire.

Un réacteur autoclave consiste généralement en un réacteur cylindrique dans lesquels est placé un agitateur. Le réacteur peut être séparé en plusieurs zones reliées entre elles en série. Avantageusement, le temps de séjour dans le réacteur est compris entre 30 et 120 secondes. Préférentiellement le rapport longueur/diamètre du réacteur est compris entre 3 et 25. L'éthylène seul et le ou les comonomères éventuels sont injectés dans la première zone du réacteur à une température comprise entre 50 et 120°C. Un initiateur est également injecté dans cette première zone réactionnelle lorsque la zone réactionnelle atteint une température comprise entre 150 et 200°C. Au cours de la réaction, la température peut être comprise entre 150 et 320°C, car la réaction est exothermique. Si le réacteur est un réacteur multizones, le flux d'éthylène et de comonomères éventuels n'ayant pas réagi ainsi que le polymère formé passent alors dans les zones réactionnelles suivantes. Dans chaque zone réactionnelle, de l'éthylène, des comonomères éventuels et des initiateurs peuvent être injectés, à une température d'initiation comprise entre 150 et 200°C. La température des zones après l'initiation est comprise entre 150 et 320°C. La pression du réacteur varie de 500.10⁵ à 3000.10⁵ Pa (500 à 3000 bar), préférentiellement de 1200.10⁵ à 3000.10⁵ Pa (1200 à 3000 bar), mieux de 1200.10⁵ à 2600.10⁵ Pa (1200 à 2600 bar).

L'invention est illustrée par les exemples qui suivent.

### Exemple 1

On réalise une polymérisation de l'éthylène avec un initiateur conventionnel, le tertio-butyl-peroxy-3,5,5-triméthylhexanoate (commercialisé par la société ARKEMA sous la référence LUPEROX^{®} 270).

Dans un réacteur agité haute pression de type autoclave de 435 mL, l'éthylène est injecté jusqu'à atteindre une pression de 1800 bars, soit environ 207g. Puis la température de paroi du réacteur est fixée à 177°C à l'aide de crayons chauffants placés dans les parois du réacteur.

La température du milieu réactionnel dans le réacteur est mesurée à l'aide de deux thermocouples.

Le tertio- butyl-peroxy-3,5,5-triméthylhexanoate (14,8 mg) est dilué dans l'heptane (1,3 g) et le propanaldéhyde (0,89 g) en amont du réacteur et à basse température (25°C), afin de ne pas initier la réaction avant l'entrée dans le réacteur. Ce mélange est alors injecté dans le réacteur à l'aide d'une pompe haute pression. La polymérisation est déclenchée dès l'injection du peroxyde à une température initiale de 177°C (température d'initiation).

On laisse la réaction se dérouler jusqu'à ce que la température finale revienne au même niveau de valeur que la température initiale (soit un temps d'essai d'environ 25 à 50 minutes).

En sortie du réacteur, le mélange éthylène/polyéthylène est détendu directement à 3 bars et le polymère est séparé de l'éthylène n'ayant pas réagi par passage dans un pot de séparation.

La quantité de polymère récupérée après polymérisation est déterminée par pesée, ce qui permet d'exprimer le taux de conversion en polymère, la consommation spécifique en peroxyde et la productivité du procédé.

La productivité est exprimée en grammes de polyéthylène produit par gramme d'initiateur peroxyde utilisé.

La conversion est définie par la quantité de polyéthylène produit par rapport à la quantité d'éthylène introduit.

Les résultats sont les suivants :
Taux de conversion en polyéthylène : 10,2%
Quantité de polyéthylène basse densité produite : 22,4 g
Productivité : 1510 g/g

On en conclut donc que les initiateurs peroxydiques conventionnels conduisent à une productivité faible.

### Exemple 2

On réalise une polymérisation de l'éthylène selon l'invention, avec l'initiateur 2,2-di(tertio-amylperoxy)butane (commercialisé par la société ARKEMA sous la référence LUPEROX^{®} 520M50).

La procédure décrite dans l'exemple 1 est reproduite, à ceci près que l'on remplace les 14,8 mg de tertio-butyl-peroxy-3,5,5-triméthylhexanoate par 10,2 mg de 2,2-di(tertio-amylperoxy)butane utilisé selon l'invention.

Les résultats sont les suivants :
Taux de conversion en polyéthylène : 13,9%
Quantité de polyéthylène basse densité produite : 30,7 g
Productivité : 3010 g/g.

L'utilisation de l'initiateur 2,2-di(tertio-amylperoxy)butane au cours d'une polymérisation à une température comprise entre 150 et 200°C permet donc d'obtenir une conversion et une productivité élevées.

### Exemple 3

On réalise une polymérisation de l'éthylène selon l'invention, avec l'initiateur 2,2-di(tertio-amylperoxy)butane.

La procédure décrite dans l'exemple 2 est reproduite, à ceci près que l'on change la température initiale de polymérisation (température d'initiation). Celle-ci est fixée à 192°C au lieu de 177°C. L'amorçage est réalisé selon l'invention comme dans l'exemple 2 par 10,2 mg de 2,2-di(tertio-amylperoxy)butane.

Les résultats sont les suivants :
Taux de conversion en polyéthylène : 14,4%
Quantité de polyéthylène basse densité produite : 31,1 g
Productivité : 3100 g/g.

L'utilisation de l'initiateur 2,2-di(tertio-amylperoxy)butane au cours d'une polymérisation à une température comprise entre 150 et 200°C permet donc d'obtenir une conversion et une productivité élevées.

### Exemple 4

On réalise une polymérisation conventionnelle de l'éthylène, avec un initiateur 2,2-di(tertio-amylperoxy)butane, mais à une température supérieure à la température utilisée dans le procédé selon l'invention.

Ainsi, la procédure décrite dans l'exemple 2 est reproduite, à ceci près que la température initiale de polymérisation (température d'initiation) est fixée à 215°C, et non 177°C.

L'amorçage est réalisé comme dans l'exemple 2 par 10,2 mg de 2,2-di(tertio-amylperoxy)butane.

Les résultats sont les suivants :
Taux de conversion en polyéthylène : 5,7%
Quantité de polyéthylène basse densité produite : 12,1 g
Productivité : 1200 g/g.

Ainsi, une polymérisation de l'éthylène menée à une température supérieure à 200°C conduit à une conversion et une productivité faibles.

Des tests complémentaires ont été réalisés afin de comparer le procédé de fabrication de polyéthylène ou d'un copolymère de l'éthylène selon l'invention (essais 1 et 2 ci-dessous) à un procédé selon l'art antérieur (selon le document US 2,650,913 dans lequel l'initiateur est le 2,2-bis-(tertiary butyl peroxy). Seuls dans le cas des initiateurs des essais 1 et 2, il est permis d'obtenir une productivité supérieure à 3000 g/g avec un taux de conversion en polymère compris entre 13% et 25% alors qu'avec le susdit initiateur visé dans le document US 2650913, ces objectifs ne sont pas atteints.

### Essai 1: Polymerisation avec initiation par le 2,2-di(tertio-amylperoxy)butane (selon l'invention) ou Luperox^{®} 520M50 :

On réalise une polymérisation de l'ethylène selon l'invention avec l'initiateur 2,2-di(tertio-amylperoxy)butane (commercialisé par la société ARKEMA sous la référence LUPEROX^{®} 520M50).

Dans un réacteur agité haute pression de type autoclave de 435 ml, l'éthylène est injecté jusqu'à atteindre une pression de 1800 bars, soit environ 207 g. Puis la température de paroi du réacteur est fixée à 177°C à l'aide de crayons chauffants placés dans les parois du réacteur.

La température du milieu réactionnel dans le réacteur est mesurée à l'aide de deux thermocouples.

Le 2,2-di(tertio-amylperoxy)butane (10,2 mg) est dilué dans l'heptane (1,3 g) et le propanaldehyde (0,89 g) en amont du réacteur et à basse température (25°C), afin de ne pas initier la réaction avant l'entrée dans le réacteur. Ce mélange est alors injecté dans le réacteur à l'aide d'une pompe haute pression. La polymérisation est déclenchée dés l'injection du peroxyde à une température initiale de 177°C (température d'initiation).

On laisse la réaction se dérouler jusqu'à ce que la température finale revienne au même niveau de valeur que la température initiale (soit un temps d'essai d'environ 25 à 50 minutes).

En sortie de réacteur, le mélange éthylène/polyéthylène est détendu directement à 3 bars et le polymère est séparé de l'éthylène n'ayant pas réagi par passage dans un pot de séparation.

La quantité de polymère récupérée après polymérisation est déterminée par pesée, ce qui permet d'exprimer le taux de conversion en polymère, la consommation spécifique en peroxyde et la productivité du procédé.

La productivité est exprimée en grammes de polyéthylène produit par gramme d'initiateur peroxyde utilisé.

La conversion est définie par la quantité de polyéthylène produit par rapport à la quantité d'éthylène introduit.

Dans l'essai les résultats suivants ont été enregistrés :
Taux de conversion en polyéthylène : 13,9%
Quantité de polyéthylène basse densité produite : 30,7 g
Productivité : 3010 g/g

### Essai 2- Polymerisation avec initiation par le 2,2-di(tertio-amylperoxy)butane (invention) ou Luperox 520M50

On réalise une polymérisation de l'ethylène selon l'invention avec l'initiateur 2,2-di(tertio-amylperoxy)butane.

La procédure décrire dans l'essai précédent (essai 1) est reproduite, à ceci près que l'on change la température initiale de polymérisation (température d'initiation). Celle-ci est fixée à 192°C au lieu de 177°C. L'amorçage est réalisé comme dans l'essai précédent par 10,2 mg de 2,2-di(tertio-amylperoxy)butane.

Les résultats sont les suivants :
Taux de conversion en polyéthylène : 14,4%
Quantité de polyéthylène basse densité produite : 31,1 g
Productivité : 3100 g/g

L'utilisation de l'initiateur 2,2-di(tertio-amylperoxy)butane au cours d'une polymérisation à une température comprise entre 150 et 200°C permet donc bien d'obtenir une conversion et une productivité élevée (conversion > 13% et productivité > 3000 g/g).

### Essai 3- Polymérisation avec initiation par le 2,2-di(tertio-butylperoxy)butane :

On réalise une polymérisation conventionnelle de l'ethylène selon l'invention avec l'initiateur 2,2-di(tertio-butylperoxy)butane.

Ainsi, la procédure décrite dans l'essai 1 est reproduite, à ceci près que l'initiateur 2,2-di(tertio-amylperoxy)butane est remplacé par le 2,2-di(tertio-butylperoxy)butane.

L'amorçage est réalisé par 10,2 mg de 2,2-di(tertio-butylperoxy)butane.

Les résultats sont les suivants :
Taux de conversion en polyéthylène : 11,9%
Quantité de polyéthylène basse densité produite : 24,6 g
Productivité : 2410 g/g

On en conclut que le 2,2-di(tertio-butylperoxy)butane conduit à une productivité plus faible (< 3000 g/g) avec une conversion inférieure à 13%.

## Revendications

1. Procédé de fabrication de polyéthylène ou d'un copolymère de l'éthylène comprenant une étape de polymérisation ou copolymérisation radicalaire de l'éthylène à une température d'initiation variant de 150°C à 200°C, à une pression variant de 500 à 3000 bar, en présence d'un initiateur de polymérisation peroxydique dilué dans un solvant ou un mélange de solvants, ledit initiateur de polymérisation peroxydique étant choisi parmi les composés peroxydes de formule 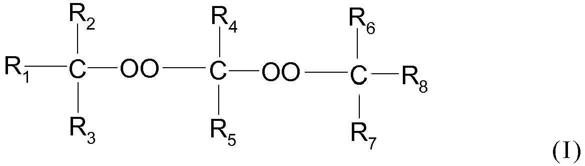 où
R1 et R8 représentent indépendamment un groupe alkyle en C2-C6,
R2, R3, R6 et R7 représentent indépendamment un groupe alkyle en C1-C5,
R4 et R5 représentent indépendamment un groupe alkyle en C1-C6.

2. Procédé selon la revendication 1 **caractérisé en ce que** R2, R3, R4, R6 et R7 représentent chacun un groupe méthyle.

3. Procédé selon l'une quelconque des revendications précédentes **caractérisé en ce que** R1 et R8 représentent indépendamment un groupe alkyle en C2-C4.

4. Procédé selon l'une quelconque des revendications précédentes **caractérisé en ce que** R5 représente un groupe alkyle en C2-C4.

5. Procédé selon l'une quelconque des revendications précédentes **caractérisé en ce que** l'initiateur de polymérisation peroxydique est le 2,2-di(tertio-amylperoxy)butane.

6. Procédé selon l'une quelconque des revendications précédentes **caractérisé en ce que** la polymérisation ou copolymérisation de l'éthylène se fait à une température d'intiation variant de 160 à 190°C.

7. Procédé selon l'une quelconque des revendications précédentes **caractérisé en ce que** la polymérisation ou copolymérisation est effectuée en présence en outre d'un initiateur peroxydique additionnel.

8. Procédé selon l'une quelconque des revendications précédentes **caractérisé en ce que** la polymérisation ou copolymérisation est effectuée en présence d'au moins un additif choisi parmi les antioxydants ; les agents de protection UV ; les agents de mise en œuvre ; les agents anti-buée ; les agents anti-bloquants ; les charges ; les agents de couplage ; les agents réticulants ; les agents antistatiques ; les agents nucléants ; les pigments ; les colorants ; les plastifiants ; les fluidifiants ; les additifs retardateurs de flamme.

## Patentansprüche

1. Verfahren zur Herstellung von Polyethylen oder einem Ethylen-Copolymer, umfassend einen Schritt der radikalischen Polymerisation bzw. Copolymerisation von Ethylen bei einer Initiierungstemperatur im Bereich von 150°C bis 200°C bei einem Druck im Bereich von 500 bis 3000 bar in Gegenwart eines in einem Lösungsmittel oder einem Gemisch von Lösungsmitteln verdünnten Peroxid-Polymerisationsinitiators, wobei der Polymerisationsinitiator aus den Peroxidverbindungen der Formel 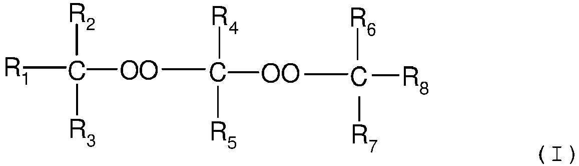 ausgewählt wird, worin
R1 und R8 unabhängig für eine C2-C6-Alkylgruppe stehen,
R2, R3, R6 und R7 unabhängig für eine C1-C5-Alkylgruppe stehen,
R4 und R5 unabhängig für eine Cl-C6-Alkylgruppe stehen.

2. Verfahren nach Anspruch 1, **dadurch gekennzeichnet, dass** R2, R3, R4, R6 und R7 jeweils für eine Methylgruppe stehen.

3. Verfahren nach einem der vorhergehenden Ansprüche, **dadurch gekennzeichnet, dass** R1 bis R8 unabhängig für eine C2-C4-Alkylgruppe stehen.

4. Verfahren nach einem der vorhergehenden Ansprüche, **dadurch gekennzeichnet, dass** R5 für eine C2-C4-Alkylgruppe steht.

5. Verfahren nach einem der vorhergehenden Ansprüche, **dadurch gekennzeichnet, dass** es sich bei dem Peroxid-Polymerisationsinitiator um 2,2-Di(tert-amylperoxy)butan handelt.

6. Verfahren nach einem der vorhergehenden Ansprüche, **dadurch gekennzeichnet, dass** die Polymerisation bzw. Copolymerisation von Ethylen bei einer Initiierungstemperatur im Bereich von 160 bis 190°C erfolgt.

7. Verfahren nach einem der vorhergehenden Ansprüche, **dadurch gekennzeichnet, dass** die Polymerisation bzw. Copolymerisation außerdem in Gegenwart eines zusätzlichen Peroxid-Initiators durchgeführt wird.

8. Verfahren nach einem der vorhergehenden Ansprüche, **dadurch gekennzeichnet, dass** die Polymerisation bzw. Copolymerisation in Gegenwart mindestens eines aus Antioxidantien; UV-Schutzmitteln; Verarbeitungshilfsmitteln; Antischleiermitteln; Antiblockmitteln; Füllstoffen; Kupplungsmitteln; Vernetzungsmitteln; Antistatika; Nukleierungsmitteln; Pigmenten; Farbmitteln; Weichmachern; Fließmitteln und Flammschutzmitteln ausgewählten Additivs durchgeführt wird.

## Claims

1. Process for manufacturing polyethylene or an ethylene copolymer, comprising a step of free-radical polymerization or copolymerization of ethylene at an initiation temperature ranging from 150°C to 200°C, at a pressure ranging from 500 to 3000 bar, in the presence of a peroxide polymerization initiator diluted in a solvent or a mixture of solvents, said peroxide polymerization initiator being chosen from the peroxide compounds of formula 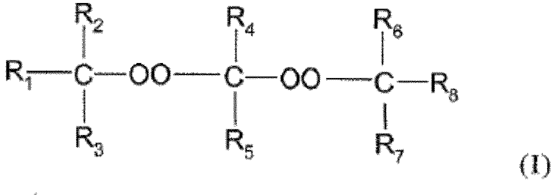 where
R₁ and R₈ independently represent a C₂-C₆ alkyl group,
R₂, R₃, R₆ and R₇ independently represent a C₁-C₅ alkyl group, and
R₄ and R₅ independently represent a C₁-C₆ alkyl group.

2. Process according to Claim 1, **characterized in that** R₂, R₃, R₄, R₆ and R₇ each represent a methyl group.

3. Process according to either one of the preceding claims, **characterized in that** R₁ and R₈ independently represent a C₂-C₄ alkyl group.

4. Process according to any one of the preceding claims, **characterized in that** R₅ represents a C₂-C₄ alkyl group.

5. Process according to any one of the preceding claims, **characterized in that** the peroxide polymerization initiator is 2,2-di(tert-amylperoxy)butane.

6. Process according to any one of the preceding claims, **characterized in that** the polymerization or copolymerization of the ethylene is carried out at an initiation temperature ranging from 160°C to 190°C.

7. Process according to any one of the preceding claims, **characterized in that** the polymerization or copolymerization is carried out in the presence also of an additional peroxide initiator.

8. Process according to any one of the preceding claims, **characterized in that** the polymerization or copolymerization is carried out in the presence of at least one additive chosen from antioxidants; UV protection agents; processing agents; antifogging agents; antiblocking agents; fillers; coupling agents; crosslinking agents; antistatic agents; nucleating agents; pigments; dyes; plasticizers; fluidizers and flame-retardant additives.
